# EUROPEAN PATENT APPLICATION

(11) **EP 4 693 703 A1**
(43) Date of publication of application: **11.02.2026**
(21) Application number: 24877565.2
(22) Date of filing: 11.10.2024
(51) Int. Cl.: H01M 50/538, H01M 50/107, H01M 50/179, H01M 50/559, H01M 50/566, H01M 50/213, H01M 50/249

(54) **CYLINDRICAL BATTERY CELL AND CURRENT COLLECTOR APPLIED THERETO, AND BATTERY PACK AND VEHICLE INCLUDING SAME**

(30) Priority: 13.10.2023 KR 20230137148
(71) Applicant: LG Energy Solution, Ltd., Seoul 07335 (KR)
(72) Inventor: LEE, Byoung-Gu, Daejeon 34122 (KR); LEE, So-Yeon, Daejeon 34122 (KR)
(74) Representative: Goddar, Heinz J.
(86) International application number: PCT/KR2024/015430
(87) International publication number: WO 2025/080030

(57) **Abstract**

A cylindrical battery cell according to an embodiment of the present disclosure may include an electrode assembly including a first electrode, a second electrode, and a separator interposed therebetween, which are wound around a winding axis to define a core and an outer surface, wherein the first electrode may include a first uncoated area not having an active material layer coated on a longitudinal end along a winding direction and exposed to the outside of the separator, and wherein at least a portion of the first uncoated area may be used as an electrode tab, a battery can including an opening on one side and configured to receive the electrode assembly through the opening, a cell terminal configured to pass through a surface of the battery can located opposite the opening, an edge portion disposed at a top of the electrode assembly, a first uncoated-area coupling portion extending inward from the edge portion and welded to the first uncoated area, and a terminal coupling portion spaced apart from the first uncoated-area coupling portion and welded to the cell terminal, wherein a plurality of welds may be provided between the first uncoated area and the current collector, and wherein an angle between adjacent welds among the plurality of welds may be configured to be an acute angle.

## Description

### TECHNICAL FIELD

The present disclosure relates to a cylindrical battery cell, a current collector applied thereto, and a battery pack and a vehicle including the same.

This application is based on and claims priority from Korean Patent Application No. 10-2023-0137148, filed on October 13, 2023, with the Korean Intellectual Property Office, the disclosure of which is incorporated herein in its entirety by reference.

### BACKGROUND ART

Secondary batteries are applied to various areas. Among these, for example, battery packs applied to devices such as electric vehicles require large capacity and high output. In addition, such battery packs having large capacity and high output may include, for example, cylindrical battery cells as unit cells.

The cylindrical battery cell having large capacity and high output may be configured such that electrode tabs are provided on the entire area of both sides of the jelly-roll to increase current collection efficiency and such that current collectors are coupled to both sides of the jelly-roll, respectively. This structure may maximize the contact area between the electrode tab and the current collector, thereby minimizing the resistance generated at the connection portions between the components.

Meanwhile, factors that increase the circuit resistance in the secondary battery include welds connecting the current collector and the electrode assembly. An increase in the number of welds brings about process issues such as melting of the separator and/or welding splatter. Therefore, minimizing the welds, as well as minimizing the resistance, is an important issue.

### DISCLOSURE

### Technical Problem

The present disclosure is designed to solve the problems of the related art, and therefore the present disclosure aims to minimize internal resistance of a secondary battery.

On the other hand, the present disclosure aims to minimize welds of a secondary battery.

More specifically, the present disclosure also aims to minimize process issues such as melting of a separator and/or welding splatter.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a cylindrical battery cell including: an electrode assembly including a first electrode, a second electrode, and a separator interposed therebetween, which are wound around a winding axis to define a core and an outer surface, wherein the first electrode includes a first uncoated area not having an active material layer coated on a longitudinal end along a winding direction and exposed to the outside of the separator, and wherein at least a portion of the first uncoated area is used as an electrode tab; a battery can including an opening on one side and configured to receive the electrode assembly through the opening; a cell terminal configured to pass through a surface of the battery can located opposite the opening; and a current collector including an edge portion disposed at a top of the electrode assembly, a first uncoated-area coupling portion extending inward from the edge portion and welded to the first uncoated area, and a terminal coupling portion spaced apart from the first uncoated-area coupling portion and welded to the cell terminal, wherein a plurality of welds are provided between the first uncoated area and the current collector, and wherein an angle between adjacent welds among the plurality of welds is configured to be an acute angle.

In one aspect of the present disclosure, the first uncoated-area coupling portion and the terminal coupling portion may be electrically connected by the edge portion.

Preferably, an angle between adjacent welds among the plurality of welds may be configured to be 45 degrees or less.

In another aspect of the present disclosure, one or more first welds may be provided between the first uncoated area and the first uncoated-area coupling portion.

For example, the first weld may have a linear shape along an extension direction of the first uncoated-area coupling portion.

In another aspect of the present disclosure, the current collector may further include a connecting portion extending inward from the edge portion and connected to the terminal coupling portion.

Here, one or more second welds may be provided between the first uncoated area and the connecting portion.

For example, the second weld may have a linear shape along an extension direction of the connecting portion.

Preferably, an angle between adjacent welds among the first welds and the second welds may be configured to be 45 degrees or less.

In another aspect of the present disclosure, at least one of the first uncoated-area coupling portion and the connecting portions may be provided in multiples.

In another aspect of the present disclosure, the connecting portion may be located between a pair of first uncoated-area coupling portions adjacent to each other.

In another aspect of the present disclosure, at least one of the first weld and the second weld may be provided in multiples.

Meanwhile, a battery pack according to an embodiment of the present disclosure may include a cylindrical battery cell according to the present disclosure; and a pack housing configured to accommodate a plurality of cylindrical battery cells.

A vehicle according to an embodiment of the present disclosure may include a battery pack according to the present disclosure described above.

In addition, a current collector, applied to a cylindrical battery cell including an electrode assembly having a first uncoated area and a second uncoated area, a battery can configured to receive the electrode assembly through an opening formed on one side and electrically connected to the second uncoated area, and a cell terminal electrically connected to the first uncoated area, may include: an edge portion interposed between a closed portion of the battery can located opposite the opening and the electrode assembly, and coupled to one surface of the electrode assembly so as to be disposed thereon; a first uncoated-area coupling portion extending inward from the edge portion and welded to the first uncoated area; and a terminal coupling portion spaced apart from the first uncoated-area coupling portion and welded to the cell terminal, wherein a plurality of welds may be provided between the first uncoated area and the current collector, and wherein an angle between adjacent welds among the plurality of welds may be configured to be 45 degrees or less.

### Advantageous Effects

According to one aspect of the present disclosure, it is possible to effectively reduce the internal resistance of a secondary battery.

According to another aspect of the present disclosure, it is possible to minimize welds of a secondary battery.

Accordingly, process issues such as melting of the separator and/or welding splatter may be minimized.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating the appearance of a cylindrical battery cell according to an embodiment of the present disclosure.
FIG. 2 is a cross-sectional view illustrating the internal structure of a cylindrical battery cell according to an embodiment of the present disclosure.
FIG. 3 is a drawing illustrating an electrode assembly, a cell terminal, and a current collector included in the cylindrical battery cell in FIG. 1.
FIG. 4 is a drawing illustrating a weld between an electrode assembly and a current collector.
FIG. 5 is a drawing illustrating a current collector included in the cylindrical battery cell in FIG. 1.
FIG. 6 is a drawing illustrating the configuration in which a conventional current collector is welded to an electrode assembly.
FIG. 7 is a drawing illustrating the configuration in which a current collector is welded to an electrode assembly according to an embodiment of the present disclosure.
FIG. 8 is a drawing illustrating the configuration in which a current collector is welded to an electrode assembly according to another embodiment of the present disclosure.
FIG. 9 is a drawing illustrating the configuration in which a current collector is welded to an electrode assembly according to another embodiment of the present disclosure.
FIG. 10 is a drawing illustrating the configuration in which a current collector is welded to an electrode assembly according to another embodiment of the present disclosure.
FIG. 11 is a graph illustrating the internal resistances of a cylindrical battery cell according to an embodiment of the present disclosure and a battery cell according to a comparative example.
FIG. 12 is a graph illustrating the internal resistances of a cylindrical battery cell according to an embodiment of the present disclosure and a battery cell according to a comparative example.
FIG. 13 is a drawing illustrating a schematic configuration of a battery pack including cylindrical battery cells according to an embodiment of the present disclosure.
FIG. 14 is a drawing illustrating a schematic configuration of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of some elements shown in the attached drawings may be exaggerated, instead of reflecting their actual sizes, for convenience of explanation and clarification. In addition, the same reference numerals may indicate the same elements among the embodiments.

The expression "two components are identical" indicates that they are "substantially identical". Therefore, the components being substantially identical may include the case they are the same with a deviation considered low in the art, for example, a deviation of less than 5%. In addition, uniformity of a parameter in a given area may indicate uniformity from an average perspective.

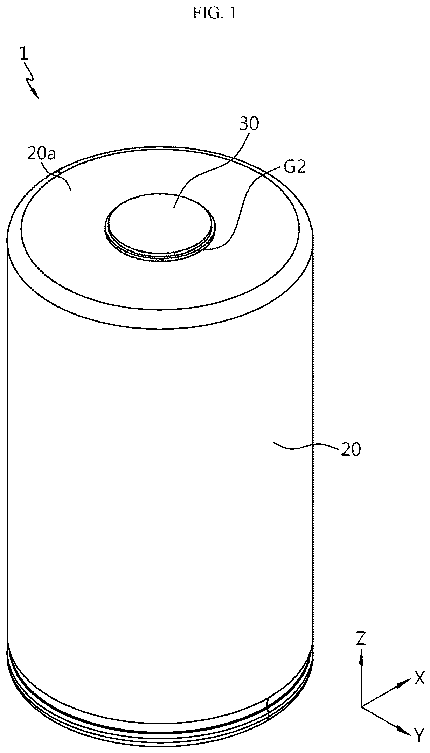

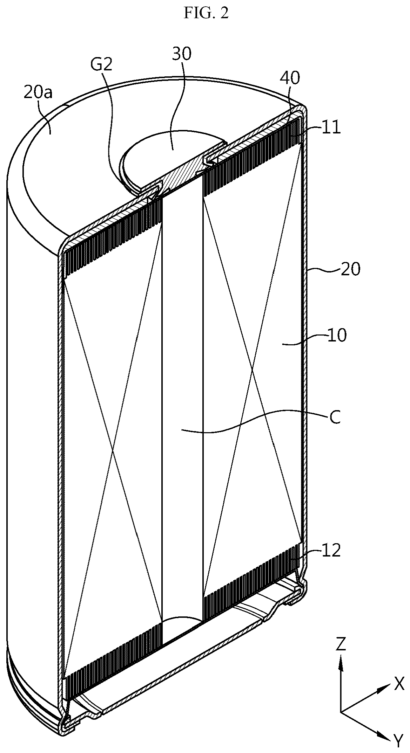

FIG. 1 is a drawing illustrating the appearance of a cylindrical battery cell according to an embodiment of the present disclosure, and FIG. 2 is a cross-sectional view illustrating the internal structure of a cylindrical battery cell according to an embodiment of the present disclosure.

Referring to FIG. 1 and FIG. 2, a cylindrical battery cell 1 according to an embodiment of the present disclosure includes an electrode assembly 10, a battery can 20, a cell terminal 30, and a current collector 40.

In addition to the components described above, the cylindrical battery cell 1 may further include an insulating gasket G2 and a second current collector.

The electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having a polarity opposite that of the first electrode.

The electrode assembly 10 may have, for example, a jelly-roll structure. That is, the electrode assembly 10 may be manufactured by winding a laminate, which is formed by stacking a first electrode current collector 40 and a second electrode current collector 40 in the form of a sheet into one or more layers with a separator interposed therebetween, in one direction based on a winding center C. In this case, an additional separator may be provided on the outer surface of the electrode assembly 10 for insulation from the battery can 20. Any jelly-roll structure known in the art may be applied without limitation to the present disclosure.

The first electrode includes a first electrode current collector 40 and a first electrode active material applied on one or both sides of the first electrode current collector 40. A first uncoated area 11 on which the first electrode active material is not applied is formed at one end of the first electrode current collector 40 in the widthwise direction (parallel to the Z-axis). The first uncoated area 11 that functions as a first electrode tab will be referred to as a first uncoated area 11 below. The first uncoated area 11 is provided at the top of the electrode assembly 10 accommodated in the battery can 20 in the height direction (parallel to the Z-axis). That is, the first electrode current collector 40 includes a first uncoated area 11 not having an active material layer coated on a longitudinal end thereof and exposed to the outside of the separator, and a portion of the first uncoated area 11 is used as an electrode tab by itself. The first uncoated area 11 may be, for example, a positive electrode tab.

Meanwhile, at least a portion of the first uncoated area 11 may include a plurality of segments split in the winding direction of the electrode assembly 10. In this case, the plurality of segments may be bent in the radial direction of the electrode assembly 10. The plurality of bent segments may overlap each other in multiple layers. In this case, a coupling portion 32 of the first uncoated area 11, which will be described later, may be coupled to an area where the plurality of segments overlap in multiple layers.

The second electrode includes a second electrode current collector 40 and a second electrode active material applied on one or both surfaces of the second electrode current collector 40. A first uncoated area 11 on which the second electrode active material is not applied is provided at the other end of the second electrode current collector 40 in the widthwise direction (parallel to the Z-axis). The first uncoated area 11 functioning as a second electrode tab will be referred to as a second uncoated area 12 below. The second uncoated area 11 is provided at the bottom of the electrode assembly 10 accommodated in the battery can 20 in the height direction (parallel to the Z-axis). That is, the second electrode current collector 40 includes a second uncoated area 12 not having an active material layer coated on a longitudinal end thereof and exposed to the outside of the separator, and a portion of the second uncoated area 12 is used as an electrode tab by itself. The second uncoated area 12 may be, for example, a positive electrode tab. Meanwhile, at least a portion of the second uncoated area 12 may include a plurality of segments split in the winding direction of the electrode assembly 10. In this case, the plurality of segments may be bent in the radial direction of the electrode assembly 10. The plurality of bent segments may overlap each other in multiple layers. In this case, the second current collector may be coupled to an area where the plurality of segments overlap in multiple layers.

The first uncoated area 11 and the second uncoated area 11 extend in opposite directions to each other along the height direction (parallel to the Z-axis) of the cylindrical battery cell 1. The first uncoated area 11 extends toward a closed portion of the battery can 20, and the second uncoated area 11 extends toward the opening of the battery can 20.

In the present disclosure, any active material known in the art may be used without limitation in the positive electrode active material coated on the positive electrode plate and the negative electrode active material coated on the negative electrode.

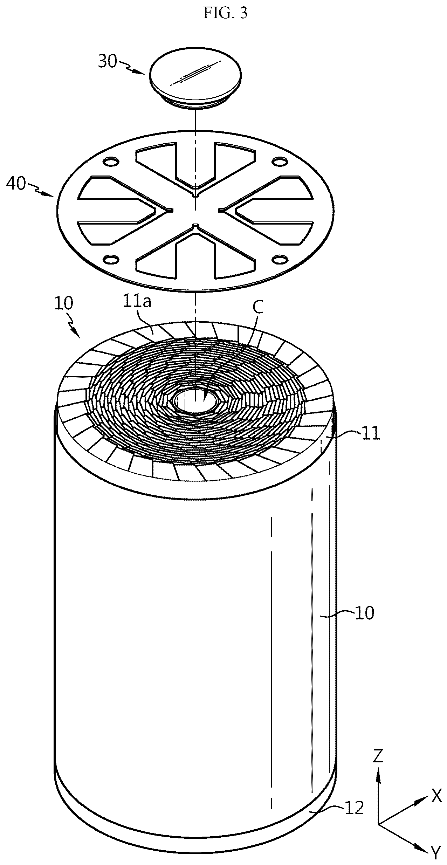

FIG. 3 is a drawing illustrating an electrode assembly 10, a cell terminal 30, and a current collector 40 included in the cylindrical battery cell in FIG. 1.

The structure of the electrode assembly 10 will be described in more detail with reference to FIG. 3. A description will be made below on the basis of the first electrode among the first and second electrodes described above as an example, but the structure of the first electrode may be applied to the second electrode in the same manner.

Preferably, the first uncoated area 11 may include a plurality of segments 11a that are notched. The plurality of segments 11a constitute a plurality of groups, and the segments 11a belonging to each group may have substantially the same height (length in the Z-axis direction), width (length in the X-axis direction), and/or pitch. The number of segments 11a belonging to each group may be increased or reduced from that shown in the drawing.

The uncoated areas 11 and 12 may be bent in the radial direction of the electrode assembly 10, for example, from the outer circumference to the core. When the uncoated areas 11 and 12 are bent, the segments adjacent to each other in the radial direction overlap each other in multiple layers, thereby forming bent surfaces on the top and bottom of the electrode assembly 10.

The battery can 20 may be configured to include an opening on one side and receive the electrode assembly 10 through the opening.

Specifically, the battery can 20 is a roughly cylindrical container with an opening formed at the bottom, and is made of a conductive material such as metal. The material of the battery can 20 may include, for example, steel, stainless steel, or nickel-plated steel. The upper surface located on the opposite side of the opening will be referred to as a closed portion. The side wall of the battery can 20 and the closed portion may be formed integrally. Alternatively, the side wall and the closed portion of the battery can 20 may be provided separately and then coupled to each other by welding or the like. The upper surface (parallel to the X-Y plane) of the battery can 20, that is, the outer surface 20a of the closed portion, may have a substantially flat shape. The battery can 20 accommodates the electrode assembly 10 together with an electrolyte through the opening formed at the bottom.

The battery can 20 is electrically connected to the electrode assembly 10. The battery can 20 is electrically connected to, for example, the second uncoated area 12 of the electrode assembly 10. In this case, the battery can 20 has the same polarity as the second uncoated area 12.

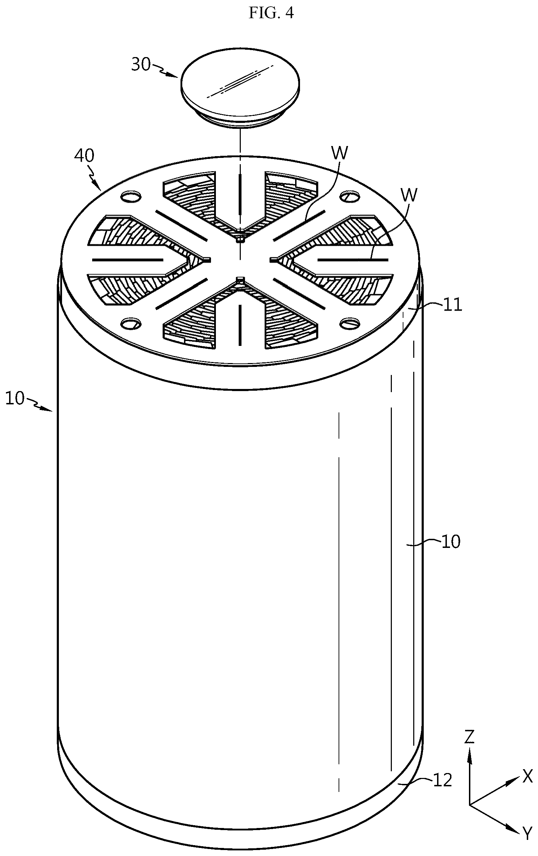

FIG. 4 is a drawing illustrating a weld W between an electrode assembly 10 and a current collector 40.

Referring to FIGS. 1 to 4, the cell terminal 30 is made of a conductive metal material. The material of the cell terminal 30 may include, for example, aluminum (Al). If the cell terminal 30 is made of aluminum, rivet processing therefor may be easily performed. The cell terminal 30 may be made of aluminum in the series 10, which has relatively low electrical resistance. The cell terminal 30 passes through the upper surface of the battery can 20, that is, the surface (parallel to the X-Y plane) located on the opposite side of the opening of the battery can 20. The cell terminal 30 is electrically connected to, for example, the first uncoated area 11 of the electrode assembly 10. In this case, the cell terminal 30 has the first polarity. Therefore, the cell terminal 30 may function as the first electrode terminal in the cylindrical battery cell 1 of the present disclosure. In the case where the cell terminal 30 has the first polarity, the cell terminal 30 is electrically insulated from the battery can 20 having the second polarity. The electrical insulation between the cell terminal 30 and the battery can 20 may be realized in various ways. For example, the insulation may be realized by interposing an insulating gasket G2 between the cell terminal 30 and the battery can 20. Alternatively, insulation may be realized by forming an insulating coating layer on a portion of the cell terminal 30. Alternatively, the cell terminal 30 may be firmly fixed in order to prevent contact between the cell terminal 30 and the battery can 20. Alternatively, two or more methods described above may be applied together. The cell terminal 30 may be riveted to the closed portion of the battery can 20.

Referring to FIGS. 2 and 3, the bottom surface of the central area of the cell terminal 30 and the current collector 40 may be coupled by, for example, laser welding, spot welding, or ultrasonic welding.

The welding may be conducted by radiating a laser beam through a hole formed in the winding center C of the electrode assembly 10 or by inserting a tool for ultrasonic welding or spot welding, thereby forming a welding bead on one side (facing the hole formed in the winding center C of the electrode assembly 10) of the current collector 40.

According to this structure, the cylindrical battery cell 1 according to an embodiment of the present disclosure may ensure smooth current flow at the coupling portion of the current collector 40 and the cell terminal 30 when a large amount of current flows due to rapid charging, thereby bringing about effects such as shortening the charging time and reducing the amount of heat generated.

The insulating gasket G2 may be interposed between the outer surface 20a of the closed portion of the battery can 20 and the cell terminal 30. The insulating gasket G2 may be made of, for example, a resin material having insulation and elasticity. Therefore, the insulating gasket G2 may electrically insulate the battery can 20 and the cell terminal 30 from each other.

Referring to FIGS. 3 to 5, the current collector 40 is coupled to the top of the electrode assembly 10. The current collector 40 is made of a conductive metal material and is connected to the first uncoated area 11. More specifically, the current collector 40 may be welded to the top of the electrode assembly 10.

The current collector 40 may be welded onto a coupling surface (bent surface) formed by bending the end of the first uncoated area 11 in a direction parallel to the current collector 40. The bending direction of the first uncoated area 11 may be the radial direction of the electrode assembly 10. The bending direction of the first uncoated area 11 may be, for example, a direction toward the winding center C of the electrode assembly 10. In the case where the first uncoated area 11 is configured in the bent shape described above, the space occupied by the first uncoated area 11 may be reduced, thereby improving the energy density. In addition, an increase in the bonding area between the first uncoated area 11 and the current collector 40 may result in improved bonding strength and reduced contact resistance.

Referring to FIGS. 3 to 5, at least a portion of the first uncoated area 11 and/or the second uncoated area 12 may include a plurality of segments 11a split along the winding direction of the electrode assembly 10. In this case, the plurality of segments may be bent along the radial direction of the electrode assembly 10. The plurality of bent segments may overlap each other in multiple layers. In this case, a first uncoated-area coupling portion 42 of the current collector 40, which will be described later, may be coupled to the area where the plurality of segments overlap each other in multiple layers.

The current collector 40 electrically connects the first uncoated area 11 of the electrode assembly 10 and the cell terminal 30. The first current collector 40 is made of a conductive metal material.

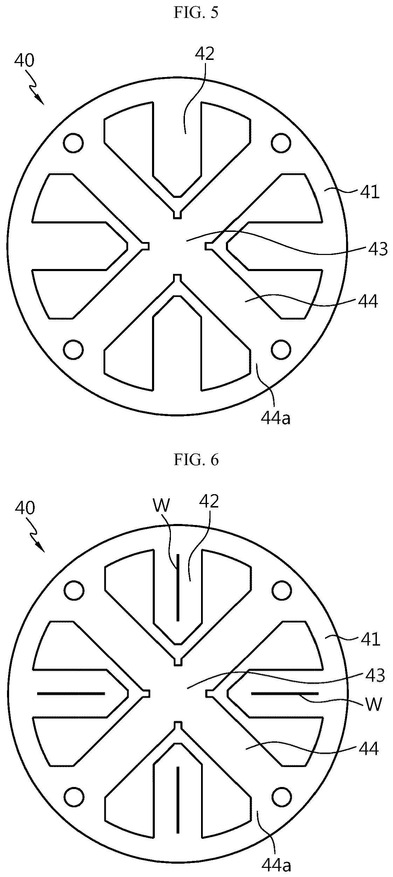

Referring to FIG. 5, the current collector 40 includes an edge portion 41, a first uncoated-area coupling portion 42, and a terminal coupling portion 43. The edge portion 41 may be disposed on the top of the electrode assembly 10 and may have a roughly rim shape with an empty space S formed therein. Although the edge portion 41 is illustrated as a roughly circular rim in the drawing of the present disclosure, the present disclosure is not limited thereto.

The first uncoated-area coupling portion 42 extends inward from the edge portion 41 and is coupled to the first uncoated area 11. Preferably, the first uncoated-area coupling portion 42 extends inward from the edge portion 41 and is welded to the first uncoated area 11. In this case, a weld W may be provided between the first uncoated-area coupling portion 42 and the first uncoated area 11.

It is preferable that the coupling between the current collector 40 and the first uncoated area 11 is performed so as to overlap the welding target area, which is a section where the number of overlapping layers of the segment is approximately the maximum and is maintained at a constant level, by at least approximately 50%. That is, the first uncoated-area coupling portion 42 of the current collector 40 may be coupled to the first uncoated area 11 so as to overlap the welding target area by at least approximately 50%.

The terminal coupling portion 43 is located on the inner side of the edge portion 41 and is spaced apart from the first uncoated-area coupling portion 42. The terminal coupling portion 43 may be coupled to the cell terminal 30 by welding. The terminal coupling portion 43 may have a diameter substantially the same as or larger than the diameter of the flat portion formed on the bottom surface of the cell terminal 30 in order to secure a welding area for coupling with the flat portion formed on the bottom surface of the cell terminal 30.

In one aspect of the present disclosure, there may be provided a plurality of welds W between the first uncoated area 11 and the current collector 40, and adjacent welds W among the plurality of welds W may be configured to have an acute angle therebetween. Here, the weld W may include at least one of a first weld W1 and a second weld W2, which will be described below.

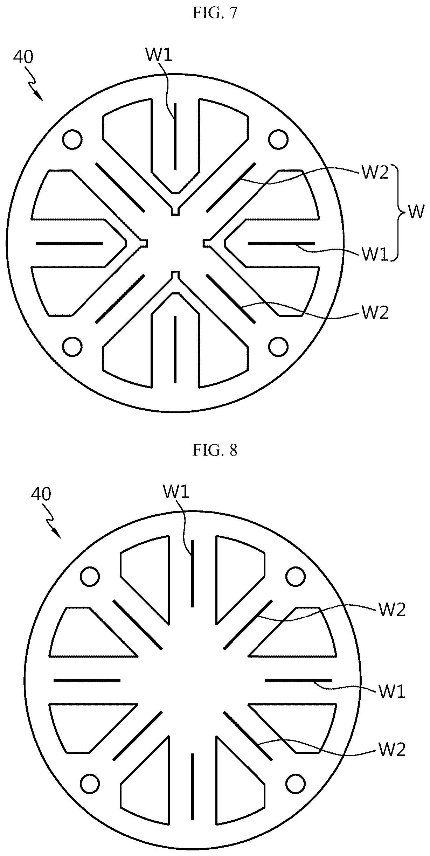

FIG. 6 is a drawing illustrating the configuration in which a conventional current collector 40 is welded to an electrode assembly 10, and FIG. 7 is a drawing illustrating the configuration in which a current collector 40 is welded to an electrode assembly 10 according to an embodiment of the present disclosure.

For example, referring to FIG. 6, in the conventional current collector 40, adjacent welds W are configured to have an angle of approximately 90 degrees. However, if the angle between the adjacent welds W is approximately 90 degrees or more, the internal resistance of a battery increases.

Meanwhile, referring to FIG. 7 according to an embodiment of the present disclosure, a plurality of welds W are provided between the current collector 40 and the electrode assembly 10, and the angle between adjacent welds W is configured to be an acute angle. More specifically, in the embodiment in FIG. 2, the angle between adjacent welds W is configured to be approximately 45 degrees. As described above, since the angle between the adjacent welds W among the plurality of welds W provided between the first uncoated area 11 and the current collector 40 is configured to be an acute angle, the resistance ACIR inside the battery may be effectively reduced. In addition, according to this structure, process issues such as melting of a separator and/or welding splatter may be minimized.

The first uncoated-area coupling portion 42 and the terminal coupling portion 43 may be spaced apart from each other, instead of being directly connected. The first uncoated-area coupling portion 42 and the terminal coupling portion 43 are electrically connected by the edge portion 41. As described above, the current collector 40 according to an embodiment of the present disclosure has a structure in which the first uncoated-area coupling portion 42 and the terminal coupling portion 43 are not directly connected to each other, but are connected through the edge portion 41, so that when impact and/or vibration occurs in the cylindrical battery cell 1, the impact applied to the coupling portion between the first uncoated-area coupling portion 42 and the first uncoated area 11 and the coupling portion between the terminal coupling portion 43 and the cell terminal 30 may be dispersed. Therefore, the current collector 40 of the present disclosure may minimize or prevent damage to the welds W due to external impact.

FIG. 7 is a drawing illustrating the configuration in which a current collector 40 is welded to an electrode assembly 10 according to an embodiment of the present disclosure, and FIG. 8 is a drawing illustrating the configuration in which a current collector 40 is welded to an electrode assembly 10 according to another embodiment of the present disclosure.

Preferably, the angle between adjacent welds W among the plurality of welds W may be configured to be about 45 degrees or less.

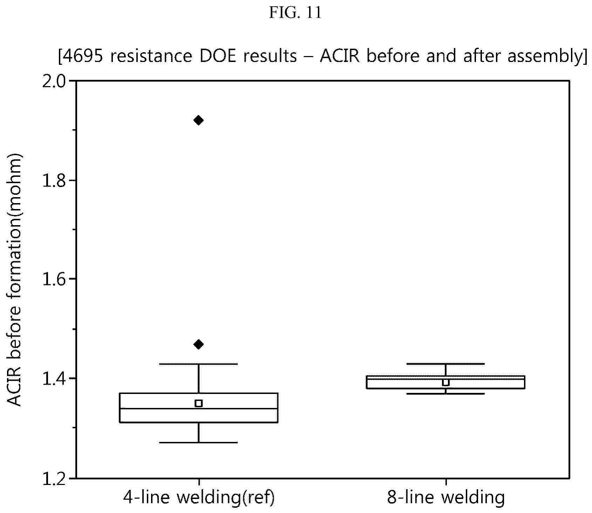

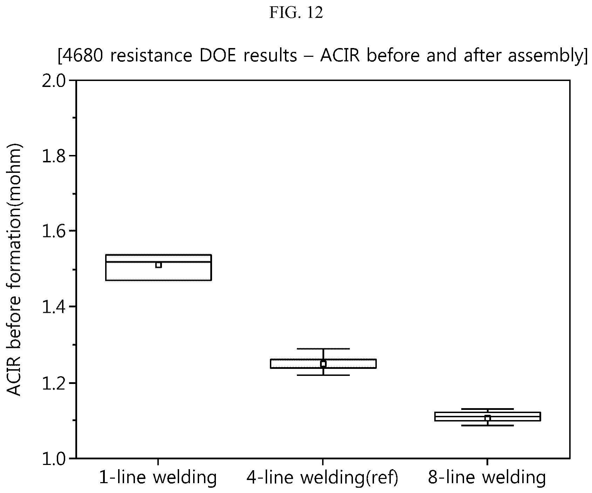

For example, referring to FIGS. 7 and 8, the angle between adjacent welds W is configured to be about 45 degrees. With this structure, the internal resistance of the battery may be significantly reduced, compared to the conventional cylindrical battery cell in which the angle between adjacent welds W is about 90 degrees. In addition, according to this structure, process issues such as melting of a separator and/or welding splatter may be minimized. However, if the angle between the adjacent welds W is set too small, the time or cost required for the process may increase, which may deteriorate the productivity. The specific effects and numerical values will be described in detail later with reference to the experimental graphs in FIGS. 11 and 12.

The current collector 40 may further include a connecting portion 44 that extends inward from the edge portion 41 and is connected to the terminal coupling portion 43.

The connecting portion 44 may have a tapered portion 44a having a width that is reduced along a direction from the inner surface of the edge portion 41 toward the terminal coupling portion 43. That is, the tapered portion 44a may be configured such that its width is increased along a direction from the connection portion of the terminal coupling portion 43 and the edge portion 41 toward the edge portion 41. The width of the tapered portion 44a may be changed continuously or stepwise. If the tapered portion 44a is provided, the rigidity of the component may be improved at the connection portion of the connecting portion 44 and the edge portion 41. If the tapered portion 44a is provided, in the manufacturing process of the cylindrical battery cell 1, for example, transport equipment and/or a worker may hold the tapered portion 44a to easily and safely transport the current collector 40 and/or the combination of the current collector 40 and the electrode assembly 10. That is, in the case where the tapered portion 44a is provided, it is possible to prevent the occurrence of product defects that may occur by holding a part that is welded to another part, such as the first uncoated-area coupling portion 42 or the terminal coupling portion 43.

Meanwhile, a plurality of first uncoated-area coupling portions 42 may be provided. In the case where a plurality of first uncoated-area coupling portions 42 are provided, the plurality of first uncoated-area coupling portions 42 may be arranged, for example, radially around the center of the terminal coupling portion 43. Although the drawings of the present disclosure illustrate only the cases where the number of the first uncoated-area coupling portions 42 is 3, 4, and 6, the present disclosure is not limited thereto. The number of the first uncoated-area coupling portions 42 may be determined in various ways in consideration of the resistance level required for the cylindrical battery cell 1, the aperture ratio of the first current collector 40, or the like. The plurality of the first uncoated-area coupling portions 42 may be regularly arranged along the extension direction of the edge portion 41. For example, the plurality of the first uncoated-area coupling portions 42 may be arranged at substantially the same intervals along the extension direction of the edge portion 41. The plurality of the first uncoated-area coupling portions 42 may have substantially the same extension length. The first uncoated-area coupling portion 42 may be coupled to the first uncoated area 11 by welding.

The terminal coupling portion 43 may be disposed to be surrounded by the plurality of the first uncoated-area coupling portions 42. The terminal coupling portion 43 may be coupled to the cell terminal 30 by welding. The connecting portion 44 may be positioned between a pair of first uncoated-area coupling portions 42 adjacent to each other. In this case, the distance from the connecting portion 44 to one of the pair of first uncoated-area coupling portions 42 in the extension direction of the edge portion 41 may be substantially the same as the distance from the connecting portion 44 to the other of the pair of first uncoated-area coupling portions 42 in the extension direction of the edge portion 41. The plurality of first uncoated-area coupling portions 42 may be formed to have substantially the same cross-sectional area. The plurality of first uncoated-area coupling portions 42 may be formed to have substantially the same width and thickness.

A plurality of connecting portions 44 may be provided. The number of the connecting portions 44 may be determined in consideration of the resistance level required for the cylindrical battery cell 1, the aperture ratio of the first current collector 40, or the like. Each of the plurality of connecting portions 44 may be disposed between a pair of first uncoated-area coupling portions 42 adjacent to each other. The plurality of connecting portions 44 may be disposed regularly in the extension direction of the edge portion 41. For example, the plurality of connecting portions 44 may be disposed at substantially the same interval along the extension direction of the edge portion 41. Meanwhile, the distance from each of the plurality of connecting portions 44 to one of the pair of first uncoated-area coupling portions 42 adjacent to each other in the extension direction of the edge portion 41 may be substantially the same as the distance to the remaining first uncoated-area coupling portion 42.

As described above, in the case where a plurality of first uncoated-area coupling portions 42 and/or a plurality of connecting portions 44 are provided, if the distance between the first uncoated-area coupling portions 42, the distance between the connecting portions 44, and/or the distance between the first uncoated-area coupling portions 42 and the connecting portion 44 are formed to be approximately constant, the flow of current from the first uncoated-area coupling portion 42 to the connecting portion 44 or the flow of current from the connecting portion 44 to the first uncoated-area coupling portion 42 may be smoothly formed.

The current collector 40 may be coupled to the first uncoated area 11 by welding. In this case, for example, laser welding, ultrasonic welding, or spot welding may be applied.

As an embodiment of the present disclosure, at least one first weld W1 may be provided between the first uncoated area 11 and the first uncoated-area coupling portion 42. Preferably, the first weld W1 may be configured to have a linear shape along the extension direction of the first uncoated-area coupling portion 42.

For example, referring to FIG. 7, the first weld W1 is provided in a linear shape between the first uncoated area 11 and the first uncoated-area coupling portion 42. However, the embodiment of the present disclosure is not limited to a linear shape. For example, for the convenience of welding, an elliptical shape or a zigzag shape may be included in the scope of the present disclosure. Since the first weld W1 is formed on the first uncoated-area coupling portion 42 extending in the radial direction, the first weld W1 may also be a shape to extend in the radial direction. That is, if the first weld W1 has, for example, an elliptical shape, the elliptical shape may extend in the radial direction. For example, if the first weld W1 has a zigzag shape, it may have a zigzag shape extending in the radial direction.

As another embodiment of the present disclosure, at least one second weld W2 may be provided between the first uncoated area 11 and the connecting portion 44. Preferably, the second weld W2 may be configured to have a linear shape along the extension direction of the first uncoated-area coupling portion 42.

For example, referring to FIG. 7, at least one second weld W2 is provided between the first uncoated area 11 and the connecting portion 44. However, the embodiment of the present disclosure is not limited to the linear form. For example, for the convenience of welding, an elliptical shape or a zigzag shape may be included in the scope of the present disclosure. Since the second weld W2 is formed on the connecting portion 44 extending in the radial direction, the second weld W2 may also be a shape to extend in the radial direction. That is, if the second weld W2 has, for example, an elliptical shape, the elliptical shape may extend in the radial direction. For example, if the second weld W2 has a zigzag shape, it may have a zigzag shape extending in the radial direction.

In another embodiment of the present disclosure, at least one of the first weld W1 and the second weld W2 may be provided in multiples.

For example, referring to FIG. 7, a plurality of first welds W1 and a plurality of second welds W2 may be provided. Meanwhile, although not shown in the drawing, only the first weld W1 may be provided in multiples, or only the second weld W2 may be provided in multiples.

According to the structure in which at least one of the first weld W1 and the second weld W2 is provided in multiples, the welding area increases, thereby reducing the internal resistance of the battery. In addition, according to the structure, the angle between adjacent welds W may be reduced. Accordingly, process issues such as melting of a separator and/or welding splatter may be minimized. Specific effects and numerical values will be described in detail later with reference to the experimental graphs in FIGS. 11 and 12.

As an embodiment of the present disclosure, referring to FIG. 7, adjacent welds W, among the first weld W1 and the second weld W2, may be configured to have an acute angle therebetween. Preferably, the angle between adjacent welds W, among the first weld W1 and the second weld W2, may be configured to be 45 degrees or less.

As another embodiment of the present disclosure, referring to FIG. 8, the first uncoated-area coupling portion 42 may be configured to be directly connected to the terminal coupling portion 43. That is, in this case, the first uncoated-area coupling portion 42 may itself become the connecting portion 44. In the embodiment shown in FIG. 8, the first uncoated-area coupling portion 42 may become the connecting portion 44, and welds W may be provided in all connecting portions of the edge portion 41 and the terminal coupling portion 43. In this case, the angle between the adjacent welds W may be, for example, about 45 degrees or less.

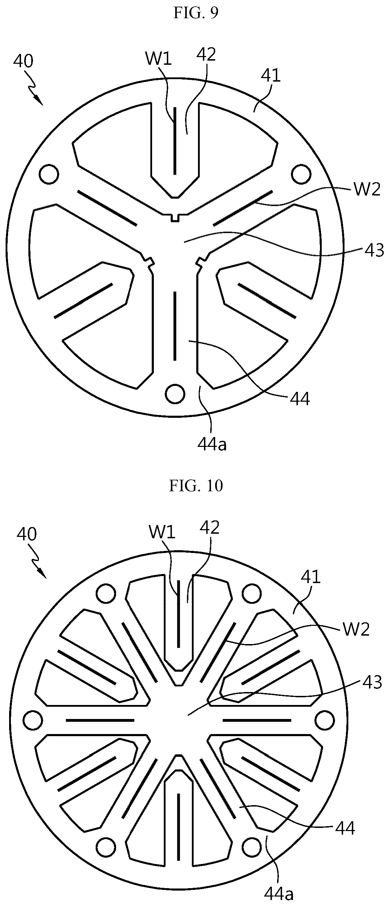

FIG. 9 is a drawing illustrating the configuration in which a current collector 40 is welded to an electrode assembly 10 according to another embodiment of the present disclosure.

As another embodiment of the present disclosure, the angle between adjacent welds W among the plurality of welds W may be configured to be 60 degrees or less.

For example, referring to FIG. 9, three first uncoated-area coupling portions 42 may be arranged at intervals of about 120 degrees. In addition, three connecting portions 44 may also be arranged at intervals of about 120 degrees. Here, the first uncoated-area coupling portions 42 and the connecting portions 44 may be provided alternately. In this case, a first weld W1 provided in the first uncoated-area coupling portion 42 and a second weld W2 provided in the connecting portion 44 adjacent thereto may be configured to be arranged at intervals of about 60 degrees therebetween.

According to this structure, the internal resistance of the battery can be reduced. In addition, process issues such as melting of a separator and/or welding splatter may be minimized.

FIG. 10 is a drawing illustrating the configuration in which a current collector 40 is welded to an electrode assembly 10 according to another embodiment of the present disclosure.

As another embodiment of the present disclosure, the angle between adjacent welds W among the plurality of welds W may be configured to be 30 degrees or less.

For example, referring to FIG. 10, six first uncoated-area coupling portions 42 may be arranged at intervals of about 60 degrees. In addition, six connecting portions 44 may also be arranged at intervals of about 60 degrees. Here, the first uncoated-area coupling portions 42 and the connecting portions 44 may be provided alternately. In this case, a first weld W1 provided in the first uncoated-area coupling portion 42 and a second weld W2 provided in the connecting portion 44 adjacent thereto may be configured to be arranged at intervals of about 30 degrees.

According to this structure, the internal resistance of the battery can be further reduced. In addition, process issues such as melting of a separator and/or welding splatter may be further minimized.

Hereinafter, a change in the internal resistance of a battery depending on a change in the welding area, and internal resistance of a battery depending on a change in the welding angle will be described with reference to FIGS. 11 and 12.

### < Experiment 1 >

FIG. 11 is a graph illustrating the internal resistances of a cylindrical battery cell according to an embodiment of the present disclosure and a battery cell according to a comparative example.

The experiment in FIG. 11 was performed by welding the current collector 40 shown in FIG. 5 to the electrode assembly 10 in a 4695 cell. In Experimental Example 1, the current collector 40 in FIG. 5 was placed on the electrode assembly 10 and then welded to the first uncoated-area coupling portion 42, thereby forming four linear first welds W1. That is, the current collector 40 in FIG. 5 has four first uncoated-area coupling portions 42 at intervals of approximately 90 degrees, and one first weld W1 was formed on each of the four first uncoated-area coupling portions 42.

In Experimental Example 2, the current collector 40 in FIG. 5 was placed on the electrode assembly 10 and then welded to the first uncoated-area coupling portion 42, thereby forming eight linear first welds W1. That is, the current collector 40 in FIG. 5 has four first uncoated-area coupling portions 42 at intervals of approximately 90 degrees, and two first welds W1 are formed on each of the four first uncoated-area coupling portions 42. As a result, the position of the first weld W1 in Experimental Example 2 is the same as the position of the first weld W1 in Experimental Example 1, and the area of the first weld W1 in Experimental Example 2 is twice the area of the first weld W1 in Experimental Example 1.

That is, in Experiment 1, changes in the resistance value and standard deviation value were measured when only the welding area was changed under the condition of the same welding angle. The results of measuring the internal resistance values ACIR of a battery in Experimental Example 1 and Experimental Example 2 are shown in Table 1 below and the graphs in FIG. 11. For reference, the resistance values shown in Table 1 and FIG. 11 indicate the resistance values before activation.

**[Table 1]**

| Unit (mohm) | Experimental Example 1 (4-line welding) | Experimental Example 2 (8-line welding) |
|---|---|---|
| Average | 1.35 | 1.40 |
| Min | 1.27 | 1.37 |
| Max | 1.92 | 1.43 |
| Stdev | 0.0768 | 0.0193 |

As can be seen from Table 1 and FIG. 11 above, when the welding area was doubled from Experimental Example 1 to Experimental Example 2, the standard deviation was significantly reduced from 0.0768 to 0.0193. On the other hand, it can be seen that the resistance value does not change significantly even though the welding area is doubled from Experimental Example 1 to Experimental Example 2. Specifically, although the welding area in Experimental Example 2 was increased by about twice, compared to Experimental Example 1, the resistance became slightly higher in Experimental Example 2. This is estimated to be a value falling within the measurement error range rather than due to the effect of the area. That is, in light of the results of Experiment 1, it was confirmed that if the welding area is secured to a certain level of 4 lines in the shape of the current collector 40 in FIG. 5, a further increase in the welding area does not have a significant effect on the resistance value. In addition, it was confirmed from Experiment 1 that an increase in the welding area significantly reduces the standard deviation value of the resistance.

### < Experiment 2 >

FIG. 12 is a graph illustrating the internal resistances of a cylindrical battery cell according to an embodiment of the present disclosure and a battery cell according to a comparative example.

The experiment in FIG. 12 was performed by welding the current collector 40 shown in FIG. 5 onto the electrode assembly 10 in a 4680 cell. In Comparative Example 1, the current collector 40 in FIG. 5 was placed on the electrode assembly 10 and then welded to the first uncoated-area coupling portion 42, thereby forming one linear first weld W1. That is, the current collector 40 in FIG. 5 has four first uncoated-area coupling portions 42 at intervals of approximately 90 degrees, and one first weld W1 was formed on one of the four first uncoated-area coupling portions 42.

In Comparative Example 2, the current collector 40 in FIG. 5 was placed on the electrode assembly 10 and then welded to the first uncoated-area coupling portion 42, thereby forming four linear first welds W1. That is, the current collector 40 in FIG. 5 has four first uncoated-area coupling portions 42 at intervals of approximately 90 degrees, and one first weld W1 is formed on each of the four first uncoated-area coupling portions 42.

In Embodiment 1, the current collector 40 in FIG. 5 was placed on the electrode assembly 10 and then welded to the first uncoated-area coupling portion 42, thereby forming four linear first welds W1 and four linear second welds W2. That is, the current collector 40 in FIG. 5 has four first uncoated-area coupling portions 42 arranged at intervals of approximately 90 degrees, and four connecting portions 44 arranged at intervals of approximately 90 degrees. Here, one first weld W1 was formed on each of the four first uncoated-area coupling portions 42, and one second weld W2 was formed on each of the four connecting portions 44.

That is, Experiment 2 is intended to identify a change in resistance value and standard deviation value when the welding angle is changed. Meanwhile, although the welding area was not set identically in Comparative Example 1, Comparative Example 2, and Embodiment 1, as confirmed in Experiment 1, if the welding area is secured to a certain level, the effect of an increase in the welding area is minimal, so it was determined that the effect of the change in the welding area on the results is minimal in Experiment 2. The results of measuring the internal resistance values ACIR of a battery in Comparative Example 1, Comparative Example 2, and Embodiment 1 are shown in Table 2 and the graphs in FIG. 12 below. For reference, the resistance values shown in Table 2 and FIG. 12 indicate the resistance values before activation.

**[Table 2]**

| Unit (mohm) | Comparative Example 1 (1-line welding) | Comparative Example 2 (4-line welding) | Embodiment 1 (8-line welding) |
|---|---|---|---|
| Average | 1.51 | 1.25 | 1.11 |
| Min | 1.47 | 1.22 | 1.09 |
| Max | 1.54 | 1.29 | 1.13 |
| Stdev | 0.0356 | 0.0297 | 0.0179 |

As can be seen in Table 2 and FIG. 12, when the welding angle was reduced to 45 degrees in Embodiment 1, compared to Comparative Example 1 and Comparative Example 2, the resistance value and standard deviation value were significantly reduced. Considering that the welding area affects the standard deviation but does not have a significant effect on the resistance value, it was confirmed from Experiment 2 that the welding angle has a significant effect on the decrease in the resistance value. In particular, it was confirmed that when the angle of the weld W becomes 45 degrees or less, the internal resistance value of the battery is significantly reduced to about 1.11 mohm.

Referring back to FIG. 7, the current collector 40 according to an embodiment of the present disclosure may be applied to a cylindrical battery cell 1 including an electrode assembly 10 having a first uncoated area 11 and a second uncoated area 12, a battery can 20 that receives the electrode assembly 10 through an opening formed on one side and is electrically connected to the second uncoated area 12, and a cell terminal 30 that is electrically connected to the first uncoated area 11.

The current collector 40 may include: an edge portion 41 interposed between a closed portion of the battery can 20 located opposite the opening and the electrode assembly 10 so as to be coupled to one surface of the electrode assembly 10, and disposed on one surface of the electrode assembly 10; a first uncoated-area coupling portion 42 extending inward from the edge portion 41 and welded to the first uncoated area 11; and a terminal coupling portion 43 spaced apart from a first uncoated-area coupling portion 42 and welded to the cell terminal 30, wherein a plurality of welds W may be provided between the first uncoated area 11 and the current collector 40, and wherein an angle between adjacent welds W, among the plurality of welds W, may be configured to be 45 degrees or less. Here, the weld W may include at least one of the first weld W1 and the second weld W2.

According to this structure, the internal resistance of the battery may be significantly reduced. In addition, process issues such as melting of a separator and/or welding splatter may be minimized.

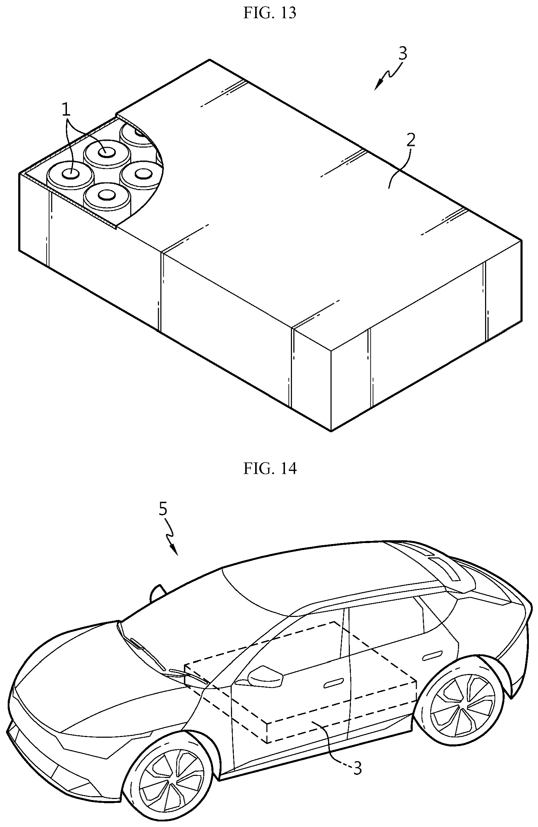

FIG. 13 is a drawing illustrating a schematic configuration of a battery pack including cylindrical battery cells according to an embodiment of the present disclosure.

Referring to FIG. 13, a battery pack 3 according to an embodiment of the present disclosure includes a secondary battery assembly in which a plurality of cylindrical battery cells 1 according to an embodiment of the present disclosure are electrically connected, and a pack housing 2 that accommodates the same. In the drawing of the present disclosure, components such as a bus-bar, a cooling unit, and a power terminal for electrical connection are omitted for convenience of drawing.

FIG. 14 is a drawing illustrating a schematic configuration of a vehicle including a battery pack according to an embodiment of the present disclosure.

Referring to FIG. 14, a vehicle 5 according to an embodiment of the present disclosure may be, for example, an electric vehicle, a hybrid vehicle, or a plug-in hybrid vehicle, and includes a battery pack 3 according to an embodiment of the present disclosure. The vehicle 5 includes a four-wheel vehicle and a two-wheel vehicle. The vehicle 5 operates by power supplied from the battery pack 3 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference numerals]

5: Vehicle
3: Battery pack
2: Pack housing
1: Cylindrical battery cell
10: Electrode assembly
11: First uncoated area
11a: Segment
12: Second uncoated area
C: Winding center
20: Battery can
20a: Outer surface (second electrode terminal)
30: Cell terminal (first electrode terminal)
G2: Insulating gasket
40: Current collector
41: Edge portion
42: First uncoated-area coupling portion
43: Terminal coupling portion
44: Connecting portion
W: Weld
W1: First weld
W2: Second weld

## Claims

1. A cylindrical battery cell comprising:
an electrode assembly comprising a first electrode, a second electrode, and a separator interposed therebetween, which are wound around a winding axis to define a core and an outer surface, wherein the first electrode comprises a first uncoated area not having an active material layer coated on a longitudinal end along a winding direction and exposed to an outside of the separator, and wherein at least a portion of the first uncoated area is used as an electrode tab;
a battery can comprising an opening on one side and configured to receive the electrode assembly through the opening;
a cell terminal configured to pass through a surface of the battery can located on an opposite side of the opening; and
a current collector comprising an edge portion disposed at a top of the electrode assembly, a first uncoated-area coupling portion extending inward from the edge portion and welded to the first uncoated area, and a terminal coupling portion spaced apart from the first uncoated-area coupling portion and welded to the cell terminal, wherein a plurality of welds are provided between the first uncoated area and the current collector, and wherein an angle between adjacent welds among the plurality of welds is configured to be an acute angle.

2. The cylindrical battery cell according to claim 1,
wherein the first uncoated-area coupling portion and the terminal coupling portion are electrically connected by the edge portion.

3. The cylindrical battery cell according to claim 1,
wherein an angle between adjacent welds among the plurality of welds is configured to be 45 degrees or less.

4. The cylindrical battery cell according to claim 1,
wherein one or more first welds are provided between the first uncoated area and the first uncoated-area coupling portion.

5. The cylindrical battery cell according to claim 4,
wherein the first weld has a linear shape along an extension direction of the first uncoated-area coupling portion.

6. The cylindrical battery cell according to claim 4,
wherein the current collector further comprises a connecting portion extending inward from the edge portion and connected to the terminal coupling portion.

7. The cylindrical battery cell according to claim 6,
wherein one or more second welds are provided between the first uncoated area and the connecting portion.

8. The cylindrical battery cell according to claim 7,
wherein the second weld has a linear shape along an extension direction of the connecting portion.

9. The cylindrical battery cell according to claim 7,
wherein an angle between adjacent welds among the first welds and the second welds is configured to be 45 degrees or less.

10. The cylindrical battery cell according to claim 1,
wherein at least one of the first uncoated-area coupling portion and the connecting portions is provided in multiples.

11. The cylindrical battery cell according to claim 6,
wherein the connecting portion is located between a pair of first uncoated-area coupling portions adjacent to each other.

12. The cylindrical battery cell according to claim 7,
wherein at least one of the first weld and the second weld is provided in multiples.

13. A battery pack comprising:
a cylindrical battery cell according to any one of claims 1 to 12; and
a pack housing configured to accommodate a plurality of cylindrical battery cells.

14. A vehicle comprising a battery pack according to claim 13.

15. A current collector applied to a cylindrical battery cell comprising an electrode assembly having a first uncoated area and a second uncoated area, a battery can configured to receive the electrode assembly through an opening formed on one side and electrically connected to the second uncoated area, and a cell terminal electrically connected to the first uncoated area, the current collector comprising:
an edge portion interposed between a closed portion of the battery can located opposite the opening and the electrode assembly, and coupled to one surface of the electrode assembly so as to be disposed thereon;
a first uncoated-area coupling portion extending inward from the edge portion and welded to the first uncoated area; and
a terminal coupling portion spaced apart from the first uncoated-area coupling portion and welded to the cell terminal,
wherein a plurality of welds are provided between the first uncoated area and the current collector, and wherein an angle between adjacent welds among the plurality of welds is configured to be 45 degrees or less.
